Europäisches Patentamt

European Patent Office

Office européen des brevets

(19)

(11) **EP 1 354 340 B1**

(12) **EUROPÄISCHE PATENTSCHRIFT**

(45) Veröffentlichungstag und Bekanntmachung des
Hinweises auf die Patenterteilung:
**19.04.2006 Patentblatt 2006/16**

(21) Anmeldenummer: **02701167.5**

(22) Anmeldetag: **07.01.2002**

(51) Int Cl.:
***H01L 21/02*** *(2006.01)*

(86) Internationale Anmeldenummer:
**PCT/DE2002/000017**

(87) Internationale Veröffentlichungsnummer:
**WO 2002/059949 (01.08.2002 Gazette 2002/31)**

(54) **SIGNALEMPFANGS- UND -VERARBEITUNGSVERFAHREN FÜR SCHNURLOSE
KOMMUNIKATIONSSYSTEME**

METHOD FOR RECEIVING AND PROCESSING SIGNALS FOR RADIO COMMUNICATION
SYSTEMS

PROCEDE DE RECEPTION ET DE TRAITEMENT DE SIGNAUX POUR DES SYSTEMES DE
COMMUNICATION SANS FIL

(84) Benannte Vertragsstaaten:
**DE FR GB IT**

(30) Priorität: **26.01.2001 DE 10103479**

(43) Veröffentlichungstag der Anmeldung:
**22.10.2003 Patentblatt 2003/43**

(73) Patentinhaber: **Infineon Technologies AG
81669 München (DE)**

(72) Erfinder:
  • **MEHRGARDT, Sönke
    82041 Deisenhofen (DE)**
  • **NEUBAUER, André
    47807 Krefeld (DE)**

(74) Vertreter: **Graf Lambsdorff, Matthias et al
Patentanwälte
Lambsdorff & Lange
Dingolfinger Strasse 6
81673 München (DE)**

(56) Entgegenhaltungen:
**US-A- 5 469 112**          **US-A- 5 724 001**

• ISMAILOGLU, YALCIN: "Low-power design of a
digital FM demodulator based on zero-cross
detection at IF" IEEE VEHICULAR TECHNOLOGY
CONFERENCE, 19. - 22. September 1999, Seiten
810-813, XP000924622 New York, US
• MARVASTI: "The reconstruction of a signal from
the zero crossings of an FM signal"
TRANSACTIONS OF THE INSTITUTE OF
ELECTRONICS AND COMMUNICATION
ENGINEERS OF JAPAN, Bd. E68, Nr. 10, Oktober
1985 (1985-10), Seite 650 XP001092765 Tokyo, JP
ISSN: 0387-236X
• BOCHE: "Zero-crossing of bandlimited signals
and bandpass signals" FREQUENZ, Bd. 51, Nr.
11-12, November 1997 (1997-11), Seiten 286-288,
XP001092764 DE ISSN: 0016-1136
• RAY: "Zero-crossing-based approximate
demodulation of wide-deviation FM" IEE
PROCEEDINGS F (COMMUNICATIONS, RADAR
AND SIGNAL PROCESSING), Bd. 131, Nr. 1,
Februar 1984 (1984-02), Seiten 47-51,
XP001092763 Stevenage, UK ISSN: 0143-7070
• BOCHE ET AL.: "Behavior of the hard-limiter for
bandpass signals and possibilities of signal
reconstruction" INTERNATIONAL
CONFERENCE ON TELECOMMUNICATIONS, Bd.
4, 21. - 25. Juni 1998, Seiten 385-388,
XP008008709 New York, US

## Beschreibung

Die vorliegende Erfindung betrifft ein Verfahren zum Verarbeiten eines empfangenen Signals in einem schnurlosen Kommunikationssystem, insbesondere für ein schnurloses Telefon, sowie eine nach dem Verfahren arbeitende Empfängerschaltung.

Schnurlose digitale Kommunikationssysteme wie beispielsweise DECT, WDCT, Bluetooth, SWAP, WLAN IEEE802.11 benötigen zum drahtlosen Empfang der über die Luftschnittstelle gesendeten hochfrequenten Signale geeignete Empfänger, die in aufwandsgünstiger Weise dem Demodulator ein möglichst verzerrungsfreies Basisbandsignal liefern. Neben einer hohen Empfindlichkeit sind hierbei ein hoher Integrationsgrad, geringe Kosten, niedrige Stromaufnahme sowie Flexibilität hinsichtlich der Anwendbarkeit für verschiedene digitale Kommunikationssysteme erwünscht. Zur Ausnutzung der Vorteile der digitalen Schaltungstechnik (keine Drifts, keine Alterung, keine Temperaturabhängigkeit, exakte Reproduzierbarkeit) wird dabei zumindest ein Teil der Empfängerschaltung in Form digitaler Signalverarbeitungselemente realisiert. Sowohl im analogen Signalverarbeitungsabschnitt (sogenanntes analoges Empfänger- "Frontend") als auch im digitalen Signalverarbeitungsabschnitt können dabei Signalverzerrungen auftreten, deren Charakteristik von den verwendeten (analogen und digitalen) Signalverarbeitungselementen abhängen. Derartige Signalverzerrungen reduzieren die Leistungseffizienz des Empfängers, d.h. sie beeinträchtigen die Empfindlichkeit bzw. die Reichweite des Empfängers bei vorgegebener Bitfehlerrate.

Für schnurlose digitale Kommunikationssysteme werden derzeit häufig Superheterodyn-Empfänger verwendet. Zur Erzielung einer höheren Systemintegration und somit niedrigeren Systemkosten kommen vermehrt auch Empfänger mit niedriger Zwischenfrequenz, sogenannte Low-IF-(Intermediated Frequency-) Empfänger oder Zero-IF-(Homodyn-)Empfänger zum Einsatz, da diese keine externen Filter zur Spiegelfrequenzunterdrückung benötigen und somit eine höhere Systemintegration ermöglichen (siehe beispielsweise DECT, Bluetooth, WDCT). Aufgrund der in den genannten Schnurlos-Systemen verwendeten digitalen Modulation GFSK, für die eine Formulierung auf Basis der Frequenzmodulation möglich ist, kommen derzeit analoge FM-Demodulatoren (Frequency Modulation) basierend auf dem Limiter-Diskriminator-Prinzip zum Einsatz. Nach dem Limiter erfolgt eine analoge frequenzselektive Filterung zur Unterdrückung der durch die Nichtlinearität des Limiters hervorgerufenen höherfrequenten Störungen. Diese Filterung ist aus signaltheoretischer Sicht nicht optimal, da auch bei exakt bandbegrenztem aufmoduliertem Signal bzw. exakt bandbegrenzter Augenblicksphase $\phi(t)$ die der Filterung unterzogene komplexe Einhüllende $e^{i\phi(t)}$ nicht exakt bandbegrenzt ist.

In der Druckschrift US-A-5 469 112 wird eine Sende-/Empfangsschaltung beschrieben, welche einen Inphase- und einen Quadraturzweig aufweist, wie sie in bekannter Weise durch Aufspalten des Empfangssignals und um 90° zwischen den beiden Zweigen phasenverschobenes Mischen des Empfangssignals mit einem lokalen Oszillatorsignal ausgebildet sind. Sowohl das Inphase- als auch das Quadratursignal werden zunächst jeweils einem Limiter zugeführt und anschließend in einen Nulldurchgangsdetektor eingegeben, in welchem die Nulldurchgänge der Signale bestimmt werden. Anschließend wird in einem Phasenwinkelschätzer die Richtung der Phase der Signale detektiert, mit der sie ihre jeweiligen Nullachsen überqueren. Diese Information wird dann mit Hilfe eines bidirektionalen Zählers und eines Entscheiders dafür genutzt, die Datenfolge des empfangenen Signals wiederzugewinnen.

Die Druckschrift US-A-5 724 001 weist ebenfalls eine Empfangsschaltung mit Inphase- und Quadraturzweig auf. In einem Demodulator-Schaltkreis wird eine Sequenz von Nulldurchgangs-Übergängen beider Signale gezählt und auf der Basis dieser Sequenz die Frequenzänderung eines Multilevel-FSK-Signals detektiert.

In der Publikation "Low-power design of a digital FM demodulator based on zero-cross detection at IF" von N. Ismailoglu und T. Yalcin in IEEE Vehicular Technology Conference, 19. - 22. September 1999, Seiten 810-813, New York, USA, wird ein digitales FM-Empfänger-/Demodulator-System beschrieben, welches ebenfalls auf der Detektion der Nulldurchgänge des Empfangssignals basiert.

Der vorliegenden Erfindung liegt somit die Aufgabe zugrunde, ein Verfahren zum Verarbeiten eines empfangenen Signals in einem schnurlosen Kommunikationssystem und eine entsprechende Empfängerschaltung zur Durchführung des Verfahrens anzugeben, durch die eine aus signaltheoretischer Sicht verbesserte Signalverarbeitung, insbesondere bei digitalen Signalübertragungsverfahren wie FSK-(Frequency Shift Keying-) modulierten Signalen ermöglicht wird.

Diese Aufgabe wird durch die kennzeichnenden Merkmale der nebengeordneten Patentansprüche 1 und 7 gelöst.

Die Erfindung beruht im wesentlichen auf dem Gedanken, daß nach Durchführung einer Kanalselektion bei dem empfangenen Signal das Signal in ein digitales, zeit- und wertediskretes Signal umgewandelt wird, und anschließend eine mathematische Rekonstruktion des Signalverlaufs anhand der Nulldurchgänge der komplexen Einhüllenden mittels eines mathematischen Rekonstruktionsalgorithmus unter Verwendung eines Funktionensystems durchgeführt wird.

Im einzelnen weist das erfindungsgemäße Verfahren die Merkmale des Patentanspruchs 1 auf.

In einer Ausführungsform eines digitalen Empfängers wird eine Frequenzumsetzung auf eine Zwischenfrequenz durchgeführt. Gegenüber den bekannten Lösungen wird somit bei dem hier vorgestellten Verfahren ausgenutzt, daß nach dem Limiter ein wertediskretes (binäres) komplexes Signal vorliegt, dessen Nutzinformation in den Nulldurchgängen von I- und Q- bzw. Real- und Imaginärteil liegt. Da dieses Signal zunächst noch zeitkontinuierlich ist, erfolgt die Überführung in ein digitales (zeit- und wertediskretes Signal) durch eine äquidistante Tastung mit einer Abtastrate $f_s$. Die mathematische Rekonstruktion der Augenblicksphase $\phi(t)$ des Signals erfolgt rein digital ausschließlich unter Verwendung der Nulldurchgänge und den bei geeignet gewählter Zwischenfrequenz bestimmbaren Phasenwerte entsprechend dem weiter unten noch beschriebenen Rekonstruktionsalgorithmus.

Abhängig von den Eigenschaften des zu rekonstruierenden Signals s(t) können für das Funktionensystem {φ (t - k)} beispielsweise verschobene orthogonale sinc-Funktionen (vgl. Shannon-Whittaker-Abtasttheorem) oder orthogonale Skalierungsfunktionen (vgl. Wavelets) verwendet werden. Als Beispiel hierfür können die sogenannten Daubechies-Skalierungsfunktionen angeführt werden.

Das erfindungsgemäße Verfahren kann jedoch auch bei nichtorthogonalen Funktionensystemen, beispielsweise bi-orthogonalen Funktionensystemen angewandt werden.

Um die bereits erreichte Signalqualität und die Rauschfilterung noch weiter zu verbessern, kann eine sich an die mathematische Rekonstruktion anschließende Filterung, eine sogenannte Post-Filterung mittels eines digitalen Filters mit einer vorbestimmten Systemfunktion erfolgen.

Das erfindungsgemäße Verfahren eignet sich besonders zur Rekonstruktion der Augenblicksphase allgemeiner CPM-Signale. Neben den oben bereits angegebenen allgemeinen Vorteilen der digitalen Signalverarbeitung besitzt das Verfahren den Vorteil, daß die Signalrekonstruktion bei auf die Signaleigenschaften der Augenblicksphase angepaßter Wahl des Funktionensystems exakt erfolgen kann. Dies ist aus signaltheoretischen Gründen bei den üblichen Verfahren nur näherungsweise der Fall. Desweiteren ermöglicht ein digitaler Empfänger auf der Basis des erfindungsgemäßen Verfahrens eine Verbesserung der Leistungseffizienz, d.h. eine Verbesserung der Empfindlichkeit bzw. der Reichweite bei vorgegebener maximaler Bitfehlerrate.

In einer weiteren Ausführungsform des erfindungsgemäßen Verfahrens kann nach der Phasenrekonstruktion auch ein Gruppenlaufzeitentzerrer zur Entzerrung der durch das analoge Kanalselektionsfilter hervorgerufenen Gruppenlaufzeitverzerrungen angeordnet werden.

Die Erfindung wird nachfolgend anhand von Ausführungsbeispielen unter Bezugnahme auf die Zeichnungen näher erläutert. In den Zeichnungen zeigen:

Fig. 1    ein schematisches Schaltungsbild einer nach dem erfindungsgemäßen Verfahren arbeitenden Empfängerschaltung; und

Fig. 2    ein schematisches Schaltungsbild einer gegenüber Fig. 1 erweiterten Empfängerschaltung; und

Fig. 3    die Skalierungsfunktion eines Daubechies-Wavelets.

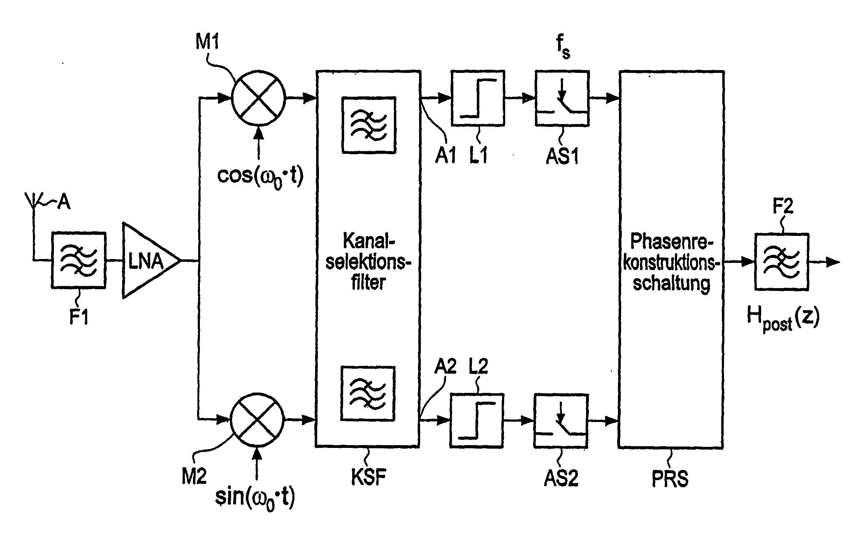

Die Fig. 1 zeigt in beispielhafter Weise den Aufbau einer erfindungsgemäßen Empfängerschaltung, welche beispielsweise in DECT-, WDCT-, Bluetooth-, SWAP-, WLAN-, IEEE802.11-Systemen (Frequenzsprungverfahren) eingesetzt werden kann.

Ein Funksignal wird von einer Antenne A aufgefangen und über ein Eingangsfilter F einem rauscharmen Eingangsverstärker LNA (Low Noise Amplifier) zugeführt. Der Eingangsverstärker LNA verstärkt das hochfrequente Antennensignal mit einer einstellbaren Verstärkung.

Nach der rauscharmen Verstärkung erfolgt eine Umsetzung des verstärkten Signals auf eine Zwischenfrequenz. Zu diesem Zweck wird das Ausgangssignal des rauscharmen Verstärkers LNA zwei Mischern M1 und M2 zugeführt. Die Mischer M1 und M2 werden in bekannter Weise unter einem Phasenversatz von 90˚ mit einer Mischfrequenz betrieben, welche von einem lokalen Oszillator (nicht dargestellt) abgeleitet ist. Die beiden zum Betreiben der Mischer M1 und M2 verwendeten Signale entsprechen in ihrer Zeitabhängigkeit $\cos(\omega_0 t)$ bzw. $\sin(\omega_0 t)$, wobei $\omega_0$ die der Oszillatorfrequenz zugeordnete Kreisfrequenz und t die Zeit bezeichnen.

An den Ausgängen der Mischer M1 bzw. M2 stehen Inphase (I-) und Quadratur-(Q-)Signale in einer herabgesetzten Frequenzlage, im folgenden als Zwischenfrequenz (ZF) bezeichnet, bereit.

Die Ausgänge der beiden Mischer M1 und M2 werden einem I-bzw. einem Q-Signaleingang eines analogen, zur Spiegelfrequenzunterdrückung dienenden Kanalselektionsfilters KSF zugeführt. Mittels des Kanalselektionsfilters KSF wird ein bestimmter Frequenzkanal ausgewählt und dadurch das gewünschte Nutzsignal aus dem eingangsseitig anliegenden, breitbandigen Signal-Störsignal-Gemisch ausgewählt.

An zwei Ausgängen A1, A2 des Kanalselektionsfilters KSF werden die beiden I- und Q-Signalkomponenten mit der Bandbreite des Nutzkanals ausgegeben.

Der Ausgang A1 des Kanalselektionsfilters KSF ist mit einem Eingang eines ersten Limiters L1 verbunden und der Ausgang A2 steht mit einem Eingang eines zweiten, baugleichen Limiters L2 in Verbindung.

Die Ausgänge der Limiter L1 und L2 sind verbunden mit jeweiligen Eingängen einer ersten und einer zweiten Abtaststufe AS1 bzw. AS2. Im Signalweg hinter den Abtaststufen AS1 und AS2 beginnt die digitale Signalverarbeitung.

Die Kombination aus Limiter (L1 bzw. L2) und Abtaststufe (AS1 bzw. AS2) repräsentiert einen Analog-Digital-Wandler der Wortbreite 1. Die Wirkungsweise dieser Kombination aus Limiter und Abtaststufe, d.h. L1, AS1 bzw. L2, AS2, ist wie folgt:

Der Limiter L1, L2 schneidet alle Eingangspegel oberhalb einer vorgegebenen Limiter-Pegelschwelle ab, d.h. er erzeugt im Abschneidebereich ein Ausgangssignal mit konstantem Signalpegel. Weist der Limiter L1, L2, wie im vorliegenden Fall, eine hohe Verstärkung und/oder eine niedrige Limiter-Pegelschwelle auf, wird er praktisch ständig im Abschneide- oder Limiter-Bereich betrieben. Dadurch liegt am Ausgang des Limiters L1, L2 bereits ein wertediskretes (binäres), aber noch zeitkontinuierliches Signal vor. Die Nutzintormation der I- und Q-Signalkomponenten an den Ausgängen der Limiter L1 und L2 besteht in den Nulldurchgängen dieser Signalkomponenten.

Durch die beiden als Ein-Bit-Abtaster realisierten Abtaststufen AS1, AS2 werden diese wertediskreten analogen Signalkomponenten mit einer Rate $f_s$ abgetastet. Die Abtastung erfolgt in Überabtastung bezogen auf die Kanalbandbreite (d.h. die Bandbreite des Signals hinter dem Kanalselektionsfilter KSF).

Beispielsweise kann die Kanalbandbreite 1 MHz betragen und die Abtastung mit $f_s$ = 104 MHz erfolgen, d.h. es kann eine Überabtastung um den Faktor 104 vorgenommen werden.

Ein Vorteil dieser Analog-Digital-Umsetzung besteht darin, daß durch den Limiter L1, L2 Amplitudenstörungen des Nutzsignals unterdrückt werden.

Die digitalisierten I- und Q-Signalkomponenten werden einer Phasenrekonstruktionsschaltung PRS zugeführt, in welcher eine Rekonstruktion der Augenblicksphase $\phi(t)$ numerisch unter Verwendung der Nulldurchgänge $\{t_i\}$ und den bei geeignet gewählter Zwischenfrequenz bestimmbaren Phasenwerten $\{\phi(t_i) = k_i \cdot \pi / 2, \; k_i \in N_0\}$ entsprechend dem nachfolgenden Rekonstruktionsalgorithmus durchgeführt wird. Hier ist s(t) das unter Verwendung eines orthogonalen Funktionensystems $\{\varphi(t - k)\}$ zu rekonstruierende Signal.

$$\text{Initialisierung} \qquad \text{für } k = 0 \text{ bis } K - 1$$

$$c_{0,k} = \sum_{i=0}^{I-1} s(t_i) \cdot a_{i,k}$$

$$\text{für } i = 0 \text{ bis } I - 1$$

$$a_{i,k} = \int_{\frac{t_{i-1}+t_i}{2}-k}^{\frac{t_i+t_{i+1}}{2}-k} \varphi(t)\,dt$$

$$\text{Ende}$$

```
                              Ende

Iteration                     für n = 0 bis N - 1

                                  für k = 0 bis K - 1
```

$$c_{n+1,k} = c_{n,k} + \sum_{i=0}^{I-1} [s(t_i) - s_{n-1}(t_i)] \cdot a_{i,k}$$

```
                                  Ende

                                  für i = 0 bis I - 1
```

$$s_n(t_i) = \sum_{k=0}^{K-1} c_{n,k} \cdot \varphi(t_i - k)$$

```
                                  Ende

                              Ende
```

Rekonstruktion

$$\hat{s}(t) = \sum_{k=0}^{K-1} c_{N,k} \cdot \varphi(t - k)$$

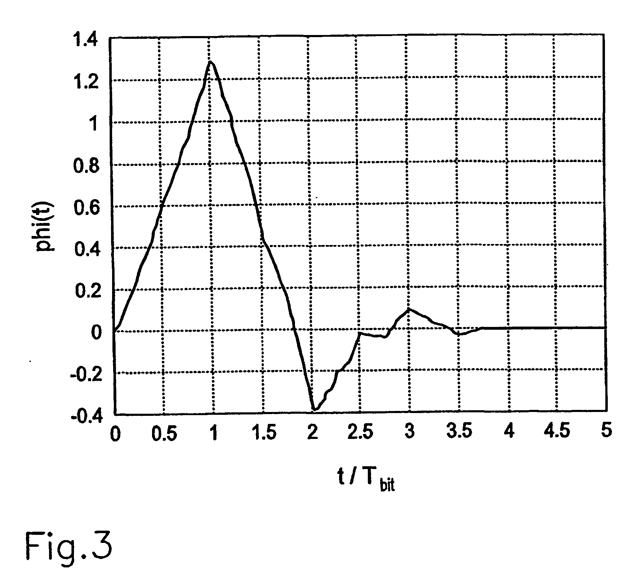

Für das Funktionensystem $\{\varphi(t-k)\}$ können beispielsweise verschobene, zueinander orthogonale sinc-Funktionen oder zueinander orthogonale Skalierungsfunktionen oder Wavelets verwendet werden. In der Fig. 3 ist als Beispiel für eine Skalierungsfunktion ein Daubechies-Wavelet der Länge 6 dargestellt. Daubechies-Skalierungsfunktionen besitzen den Vorteil eines endlichen Trägers.

Zur Verbesserung der Signalqualität und zur Rauschfilterung kann gemäß Fig. 1 auch noch eine Post-Filterung mittels eines digitalen Filters F2 mit der Systemfunktion $H_{post}$ (z) erfolgen.

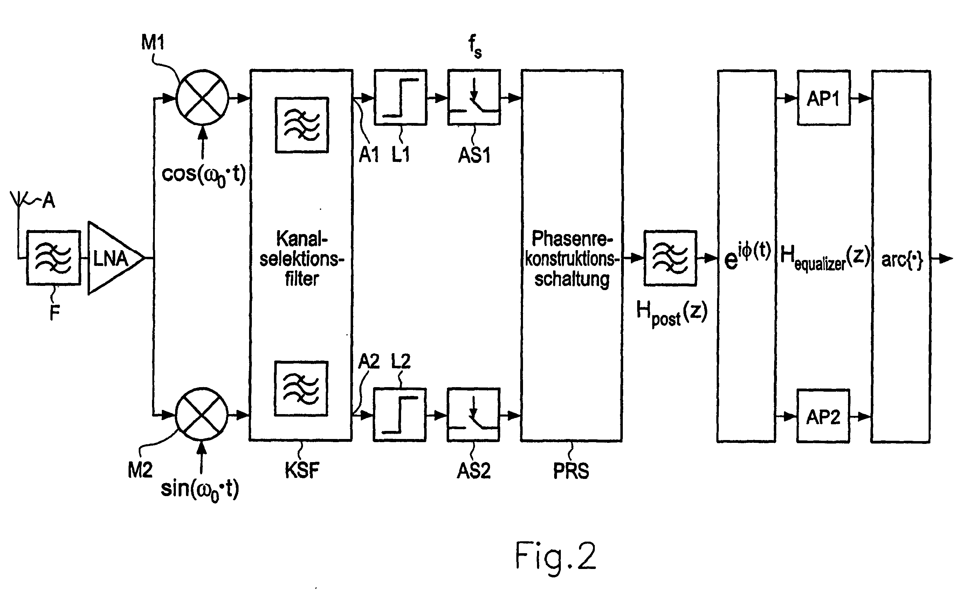

In der Fig. 2 ist eine gegenüber der Ausführungsform der Fig. 1 erweiterte Ausführungsform einer Empfängerschaltung dargestellt. In dieser ist hinter der Phasenrekonstruktionsschaltung PRS ein Gruppenlaufzeitentzerrer zur Entzerrung der durch das analoge Kanalselektionsfilter hervorgerufenen Gruppenlaufzeitverzerrungen angeordnet. Der Gruppenlaufzeitentzerrer besteht aus Allpassfiltern AP1 und AP2, die in den entsprechenden Signalwegen angeordnet sind. Die I- bzw. Q-Signalausgänge der Allpassfilter AP1, AP2 können entsprechenden Eingängen eines geeigneten Demodulators zugeführt werden.

Im allgemeinen Fall kann es sich bei dem Demodulator um einen CPM-(Continuous Phase Modulation-)Demodulator handeln. Dieser schätzt aus den seinen Eingängen zugeführten Signalkomponenten, d.h. aus der Augenblicksphase oder der Augenblicksfrequenz dieser Signalkomponenten, die Datensymbole der übertragenen Datensymbolfolge.

**Patentansprüche**

**1.** Verfahren zum Verarbeiten eines FSK-modulierten Empfangssignals in einem schnurlosen Kommunikationssystem, mit den Schritten:

- Durchführen einer Kanalselektion mittels eines analogen Kanalselektionsfilters (KSF),
- Umwandeln des Signals in ein digitales, zeit- und wertediskretes Signal,
- Detektieren der Nulldurchgänge $\{t_i\}$ des umgewandelten Signals,

**gekennzeichnet durch** die Schritte

- mathematisches Rekonstruieren des zeit- und wertekontinuierlichen Signalverlaufs des Empfangssignals s(t) unter Verwendung der Nulldurchgänge $\{t_i\}$ und der Phasenwerte $\{\phi(t_i) = k_i \cdot \pi / 2, k_i \in N_0\}$ mittels des folgenden mathematischen Rekonstruktionsalgorithmus unter Verwendung eines, insbesondere orthogonalen, Funktionensystems $\{\varphi(t - k)\}$ :

Initialisierung **für k = 0 bis K - 1**

$$c_{0,k} = \sum_{i=0}^{I-1} s(t_i) \cdot a_{i,k}$$

**für i = 0 bis I - 1**

$$a_{i,k} = \int_{\frac{t_{i-1}+t_i}{2}-k}^{\frac{t_i+t_{i+1}}{2}-k} \varphi(t)dt$$

**Ende**

**Ende**

Iteration **für n = 0 bis N - 1**

**für k = 0 bis K - 1**

$$c_{n+1,k} = c_{n,k} + \sum_{i=0}^{I-1} \left[ s(t_i) - s_{n-1}(t_i) \right] \cdot a_{i,k}$$

**Ende**

**für i = 0 bis I - 1**

$$s_n(t_i) = \sum_{k=0}^{K-1} c_{n,k} \cdot \varphi(t_i - k)$$

**Ende**

**Ende**

Rekonstruktion $\quad \hat{s}(t) = \sum_{k=0}^{K-1} c_{N,k} \cdot \varphi(t - k)$

**2.** Verfahren nach Anspruch 1,
**dadurch gekennzeichnet, daß**

- das Funktionensystem zueinander orthogonale verschobene sinc-Funktionen oder zueinander orthogonale Skalierungsfunktionen oder Wavelets enthält.

**3.** Verfahren nach Anspruch 1 oder 2,
**dadurch gekennzeichnet, daß**

- zur Digitalisierung des empfangenen Signals eine Signallimitierung und eine Überabtastung des limitierten Signals vorgenommen wird.

**4.** Verfahren nach Anspruch 3,
**dadurch gekennzeichnet, daß**

- bei der Überabtastung ein Signal der Wortbreite 1 erzeugt wird.

**5.** Verfahren nach einem der vorhergehenden Ansprüche,

**dadurch gekennzeichnet, daß**

- im Signalweg hinter der mathematischen Rekonstruktion eine Gruppenlaufzeitentzerrung durchgeführt wird.

**6.** Verfahren nach einem der vorhergehenden Ansprüche,
**dadurch gekennzeichnet, daß**

- nach der Kanalselektion eine Frequenzumsetzung auf eine Zwischenfrequenz durchgeführt wird.

**7.** Empfängerschaltung eines schnurlosen Kommunikationssytems zur Durchführung des Verfahrens nach Anspruch 1, mit

- einem analogen Signalverarbeitungsabschnitt und einem digitalen Signalverarbeitungsabschnitt,
- einem Kanalselektionsfilter (KSF) im analogen Signalverarbeitungsabschnitt,
- einem Nulldurchgangsdetektor (L1, AS1; L2, AS2), dessen Eingang mit einem Ausgang (A1; A2) des Kanalselektionsfilters (KFS) verbunden ist,

**dadurch gekennzeichnet, daß**

- in dem digitalen Signalverarbeitungsabschnitt eine Phasenrekonstruktionsschaltung (PRS) enthalten ist, deren Eingang mit dem Ausgang des Nulldurchgangsdetektors (L1, AS1; L2, AS2) verbunden ist und die dafür ausgelegt ist, um den zeit- und wertekontinuierlichen Signalverlauf unter Verwendung der Nulldurchgänge $\{t_i\}$ und periodischen Phasenwerten $\{\phi(t_i) = k_i \cdot \pi/2, k_i \in N_0\}$ mittels des mathematischen Rekonstruktionsalgorithmus unter Verwendung eines Funktionensystems $\{\varphi(t - k)\}$ mathematisch zu rekonstruieren.

**8.** Empfängerschaltung nach Anspruch 7,
**dadurch gekennzeichnet, daß**

- im digitalen Signalverarbeitungsabschnitt ein Gruppenlaufzeitentzerrer (AP1, AP2) zur Entzerrung zumindest der durch das Kanalselektionsfilter (KSF) bewirkten Signalverzerrung vorgesehen ist.

**9.** Empfängerschaltung nach Anspruch 8,
**dadurch gekennzeichnet, daß**

- der Gruppenlaufzeitentzerrer (AP1, AP2) ein Allpass-Filter ist.

**Claims**

**1.** Method for processing an FSK-modulated received signal in a cordless communications system, having the following steps:

- a channel selection process is carried out by means of an analogue channel selection filter (KSF),
- the signal is converted to a digital and a time-discrete and value-discrete signal,
- the zero crossings $\{t_i\}$ of the converted signal are detected,

**characterized by** the following steps:

- mathematical reconstruction of the time-continuous and value-continuous signal profile of the received signal $\hat{s}(t)$ using the zero crossings $\{t_i\}$ and the phase values $\{\phi(t_i) = k_i \cdot \pi/2, k_i \in No\}$ by means of the following mathematical reconstruction algorithm using a function system, in particular an orthogonal function system, $\{\varphi(t-k)\}$:

Initialization

$$\text{for } k = 0 \text{ to } K - 1$$

$$c_{0,k} = \sum_{i=0}^{I-1} s(t_i) \cdot a_{i,k}$$

$$\text{for } i = 0 \text{ to } I - 1$$

$$a_{i,k} = \int_{\frac{t_{i-1}+t_i}{2}-k}^{\frac{t_i+t_{i+1}}{2}-k} \varphi(t)\,dt$$

$$\text{End}$$

$$\text{End}$$

Iteration

$$\text{for } n = 0 \text{ to } N - 1$$

$$\text{for } k = 0 \text{ to } K - 1$$

$$c_{n+1,k} = c_{n,k} + \sum_{i=0}^{I-1} \left[ s(t_i) - s_{n-1}(t_i) \right] \cdot a_{i,k}$$

$$\text{End}$$

$$\text{for } i = 0 \text{ to } I - 1$$

$$s_n(t_i) = \sum_{k=0}^{K-1} c_{n,k} \cdot \varphi(t_i - k)$$

$$\text{End}$$

$$\text{End}$$

Reconstruction

$$\hat{s}(t) = \sum_{k=0}^{K-1} c_{N,k} \cdot \varphi(t - k)$$

**2.** Method according to Claim 1,
**characterized in that**

- the function system contains mutually orthogonally shifted sinc functions or mutually orthogonal scaling functions, or wavelets.

**3.** Method according to Claim 1 or 2,
**characterized in that**

- signal limiting and oversampling of the limited signal are carried out for digitization of the received signal.

**4.** Method according to Claim 3,
**characterized in that**

- a signal with a word length of 1 is produced during the oversampling.

**5.** Method according to one of the preceding claims,
**characterized in that**

- group delay time equalization is carried out in the signal path downstream from the mechanical reconstruction.

**6.** Method according to one of the preceding claims,
**characterized in that**

- frequency conversion to an intermediate frequency is carried out after the channel selection.

**7.** Receiver circuit for a cordless communications system for carrying out the method according to Claim 1, having

- an analogue signal processing section and a digital signal processing section,
- a channel selection filter (KSF) in the analogue signal processing section,
- a zero crossing detector (L1, AS1; L2, AS2), whose input is connected to an output (A1; A2) of the channel selection filter (KSF),

**characterized in that**

- the digital signal processing section contains a phase reconstruction circuit (PRS), whose input is connected to the output of the zero-crossing detector (L1, AS1; L2, AS2) which is designed to mathematically reconstruct the continuous-time and continuous-value signal profile using the zero crossing $\{t_i\}$ and periodical phase values $\{\phi(t_i) = k_i \cdot \pi / 2, k_i \in N_0\}$ by means of the mathematical reconstruction algorithm, using a function system $\{\varphi(t - k)\}$.

**8.** Receiver circuit according to Claim 7,
**characterized in that**

- the digital signal processing section has a group delay time equalizer (AP1, AP2) for equalization of at least the signal distortion which is caused by the channel selection filter (KSF).

**9.** Receiver circuit according to Claim 8,
**characterized in that**

- the group delay time equalizer (AP1, AP2) is an all-pass filter.


**Revendications**

**1.** Procédé de traitement d'un signal de réception à modulation par déplacement de fréquence dans un système de communication sans fil, comprenant les stades dans lesquels :

- on effectue une sélection de canal au moyen d'un filtre (KSF) analogique de sélection de canal,
- on transforme le signal en un signal numérique de nature discrète dans le temps et dans la valeur,
- on détecte les passages $\{t_i\}$ par zéro du signal transformé,

**caractérisé par** les stades dans lesquels

- on reconstruit mathématiquement la courbe du signal $\hat{s}(t)$ de réception continue dans le temps et dans la valeur en utilisant les passages $\{t_i\}$ par zéro et les valeurs $\{\phi(t_i) = ki \cdot \pi/2, k_i \in N_0\}$ de phase au moyen de l'algorithme mathématique de reconstruction suivant, en utilisant un système $\{\phi(t - k)\}$ de fonctions normalement orthogonales :

Initialisation pour $k = 0$ à $K - 1$

$$c_{0,k} = \sum_{i=0}^{I-1} s(t_i) \cdot a_{i,k}$$

pour $i = 0$ à $I - 1$

$$a_{i,k} = \int_{\frac{t_{i-1}+t_i}{2}-k}^{\frac{t_i+t_{i+1}}{2}-k} \varphi(t)dt$$

Fin

Fin

Itération pour $n = 0$ à $N - 1$

pour $k = 0$ à $K - 1$

$$c_{n+1,k} = c_{n,k} + \sum_{i=0}^{I-1} [s(t_i) - s_{n-1}(t_i)] \cdot a_{i,k}$$

Fin

pour $i = 0$ à $I - 1$

$$s_n(t_i) = \sum_{k=0}^{K-1} c_{n,k} \cdot \varphi(t_i - k)$$

Fin

Fin

Reconstruction $\hat{s}(t) = \sum_{k=0}^{K-1} c_{N,k} \cdot \varphi(t - k)$

**2.** Procédé suivant la revendication 1,
   **caractérisé en ce que**

   - le système de fonctions contient des fonctions sinc décalées orthogonalement les unes par rapport aux autres ou des fonctions de mise à l'échelle ou des fonctions wavelet orthogonales les unes par rapport aux autres.

**3.** Procédé suivant la revendication 1 ou 2,
   **caractérisé en ce que**

   - pour la numérisation du signal requis, on effectue une limitation du signal et un suréchantillonnage du signal limité.

**4.** Procédé suivant la revendication 3,
   **caractérisé en ce que**

   - on produit, lors du suréchantillonnage, un signal de largeur de mot égal à 1.

**5.** Procédé suivant l'une des revendications précédentes,
   **caractérisé en ce que**

   - on effectue, dans le trajet du signal en aval de la reconstruction mathématique, une correction du temps de propagation de groupe.

**6.** Procédé suivant l'une des revendications précédentes, **caractérisé en ce que**

- on effectue, après la sélection de canal, une conversion de fréquence sur une fréquence intermédiaire.

**7.** Circuit récepteur d'un système de communication sans fil pour la mise en oeuvre du procédé suivant la revendication 1, comprenant

- une partie analogique de traitement du signal et une partie numérique de traitement du signal,
- un filtre (KSF) de sélection de canal dans la partie analogique de traitement du signal,
- un détecteur (L1, AS1 ; L2, AS2) de passage par zéro, dont l'entrée est reliée à une sortie (A1 ; A2) du filtre (KSF) de sélection de canal),

**caractérisé en ce que**

- il est contenu dans la partie numérique de traitement du signal un circuit (PRS) de reconstruction de phase dont l'entrée est reliée à la sortie du détecteur (L1, AS1 ; L2, AS2) de passage par zéro, et qui est conçu pour reconstruire mathématiquement la courbe du signal continu dans le temps et dans la valeur en utilisant les passages $\{t_i\}$ par zéro et les valeurs $\{\phi(t_i) = k_i \cdot \pi/2, k_i \in N_0\}$ de phases périodiques au moyen de l'algorithme de reconstruction mathématique en utilisant un système $\{\varphi(t - k)\}$ de fonctions.

**8.** Circuit récepteur suivant la revendication 7, **caractérisé en ce que**

- il est prévu dans la partie numérique de traitement du signal un correcteur (AP1, AP2) du temps de propagation de groupe pour corriger au moins la distorsion du signal provoquée par le filtre (KSF) de sélection de canal.

**9.** Circuit récepteur suivant la revendication 8, **caractérisé en ce que**

- le correcteur (AP1, AP2) de temps de propagation de groupe est un filtre allpass.

EP 1 354 340 B1

Fig.2

Fig.3